# EUROPÄISCHE PATENTSCHRIFT

(11) **EP 1 976 291 B1**
(45) Veröffentlichungstag und Bekanntmachung des Hinweises auf die Patenterteilung: **02.07.2014**
(21) Anmeldenummer: 08003745.0
(22) Anmeldetag: 29.02.2008
(51) Int. Cl.: H04N 7/14, H04N 7/15, H04M 1/64

(54) **Verfahren und videokommunikationssystem zur Gestik-basierten Echtzeit-Steuerung eines Avatars**
Method and video communication system for gesture-based real-time control of an avatar
Procédé et système de communication vidéo destinés à la commande en temps réel basée sur la gestuelle d'un avatar

(30) Priorität: 02.03.2007 DE 102007010662
(43) Veröffentlichungstag der Anmeldung: 01.10.2008
(73) Patentinhaber: Deutsche Telekom AG, 53113 Bonn (DE)
(72) Erfinder: Kaspar, Bernhard, 64646 Heppenheim (DE); Englert, Roman, 53913 Buschhoven gem. Swisttal (DE); Feldes, Stefan, 69496 Weinheim (DE)
(74) Vertreter: Kampfenkel, Klaus

(56) Entgegenhaltungen:
- WO-A-99/57900
- WO-A-03/058518
- US-A1- 2002 018 070
- US-A1- 2004 114 731

## Beschreibung

Die Erfindung betrifft ein Verfahren sowie ein Avatar-basiertes Videokommunikationssystem zur Gestik-basierten Echtzeit-Steuerung eines virtuellen Körpermodells. Des Weiteren betrifft die Erfindung eine mobile Endeinrichtung zum Einsatz in einem solchen Avatar-basierten Videokommunikationssystem.

Gestik-basierte Echtzeit-Steuerung von Avataren auf der Basis von leistungsfähigen Computern ist bekannt. Bei einem Avatar handelt es sich um eine virtuelle Stellvertreterfigur, die eine natürliche Person darstellt. Durch die Avatar-Darstellung können beteiligte natürliche Personen in andere Rollen schlüpfen. Kopf-, Hand- und Fingerbewegungen einer natürlichen Person werden hierbei in Echtzeit in Bewegungen eines 3D-Avatar-Modells umgesetzt. Zu diesem Zweck werden Videosequenz der natürlichen Person über eine Kamera aufgezeichnet. Mittels automatischer Analyse werden aus der Videosequenz Bewegungen extrahiert. Die Bewegungen werden kodiert übertragen und empfangsseitig zur Ansteuerung des beweglichen Avatars genutzt. Die Gestik-basierte Echzeit-Steuerung von Avataren ist beispielsweise aus der DE 10 2004 059 051 A1 bekannt.

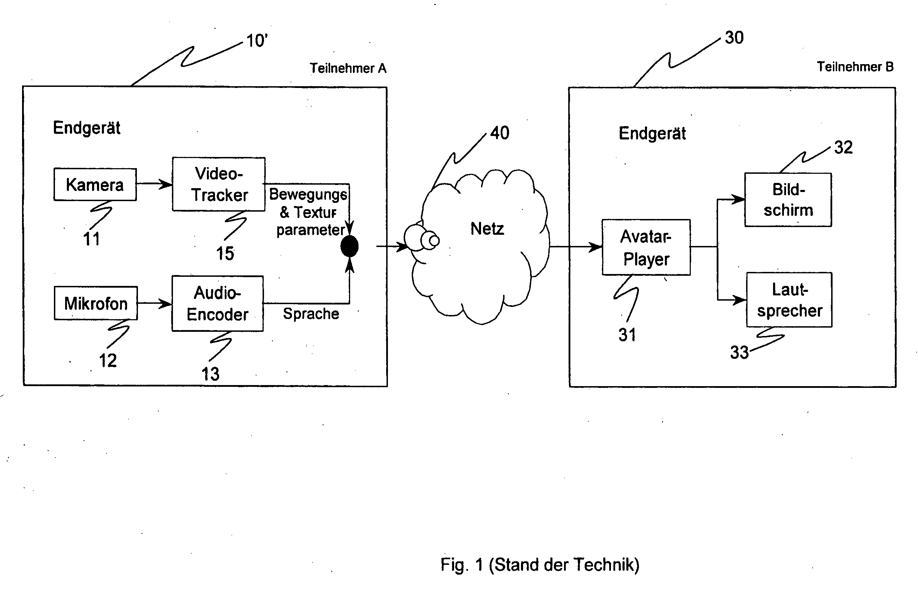

Die Avatar-Technologie findet immer häufiger auch in Telekommunikations-Videosystemen Anwendung. Eine beispielhafte Architektur zur Avatar-basierten Videokommunikation ist in Fig. 1 dargestellt. Fig. 1 zeigt einen Teilnehmer A mit einem Endgerät 10' sowie einen Teilnehmer B mit einem Endgerät 30, welche beispielsweise über ein IP-Netz 40, welches das Internet sein kann, miteinander verbunden werden können. Lediglich der einfachen Darstellung wegen ist das Endgerät 10 als Sendeeinrichtung gezeigt, wohingegen das Endgerät 30 des Teilnehmers B lediglich als Empfangsgerät dargestellt ist. Selbstverständlich weist in der Praxis sowohl das Endgerät 10 eine Empfangseinrichtung als auch das Endgerät 30 eine entsprechende Sendeeinrichtung auf.

Die Sendeeinrichtung des Endgeräts 10 ist aus einer herkömmlichen Videokamera 11, einem Videotracker 15, einem Mikrofon 12 und einem Audiokodierer 13 aufgebaut. Die von der Kamera 11 gelieferten Videosequenzen werden mit dem Videotracker 15 oder einem Motion-Tracker analysiert in Bewegungsparameter und Texturparameter umgesetzt. Spezielle Schätzverfahren, die vom Videotracker 15 durchgeführt werden, finden die aufzunehmende Person, verfolgen die Position der Person über der Zeit, identifizieren Körperteile wie Kopf, Hals, Schultern, Augen und Hände und dergleichen und verfolgen auch deren Bewegung über der Zeit. Die gewonnene Information wird dann in eine entsprechende Parameterform umgesetzt. Derartige Schätzverfahren wurden beispielsweise von Eisert, Peter in dem Aufsatz "MPEG 4 Facial Animation in Video Analysis and Synthesis", in International Journal of Imaging Systems and Technology Springer, vol. 13, no. 5, pp. 245-256, March 2003 und von Schreer et al. in dem Aufsatz "Vision-Based-Skin-Colour Segmentation of Moving Hands for Real-Time Applications", in Proc. Of 1st European Conf. On Visual Media Production (CVMP 2004), London, United Kingdom, March 2004 beschrieben.

Bei den Bewegungsdaten kann es sich um Gesichts- und Körperanimationsparameter gemäß dem MPEG-4-Standard handeln, die im Englischen auch als Body Animation Parameters (BAP) und Facial Animation Parameters (FAP) bekannt sind. Die zur Animation erforderlichen Parameter werden über das Kommunikationsnetz 40 zum Endgerät 30 übertragen. Zusätzlich kann auch das über das Mikrofon 12 aufgenommene Sprachsignal des Teilnehmers A zum Endgerät 30 übertragen werden. Die Sprachparameter können auch Informationen enthalten, die sogenannte Viseme beschreiben. Die Viseme-Informationen erlauben die Animation des Gesichtes, insbesondere der Mundpartie, so dass eine zum Sprechsignal passende Lippenbewegung im Endgerät 30 erzeugt werden kann. Die empfangenen Bild- und Sprachsignale werden über an sich bekannten Avatar-Player 32 auf einem Bildschirm 32 wiedergegeben, während die übertragenen Sprachsignale über eine entsprechende Lautsprechereinrichtung 33 akustisch wiedergegeben werden können. Der Teilnehmer B sieht somit anstelle des realen Teilnehmers A dessen virtuellen Stellvertreter.

Ein Nachteil des bekannten Avatar-basierten Videokommunikationssystems ist darin zu sehen, dass in den Endgeräten leistungsfähige und somit teure Rechner implementiert sein müssen, die die rechen- und ressourcenaufwendigen Prozesse übernehmen, die zur Bildanalyse, d. h. Segmentierung, Objekt-Detektion und Objekt-Tracking erforderlich sind.

Der Erfindung liegt die Aufgabe zugrunde, ein Verfahren sowie ein Avatar-basiertes Videokommunikationssystem zur Gestik-basierten Echtzeit-Ansteuerung eines virtuellen Körpermodells zur Verfügung zu stellen, welches den Einsatz von weniger komplexen und somit kostengünstigen Endgeräten ermöglicht.

Die Druckschrift US 2004/114731 Al offenbart ein Telefonsystem, in welchem Modelle eines Teilnehmers, von welchen eine Videosequenz synthetisiert wird, zu einem Empfänger übertragen werden.

Die Druckschrift WO 99/57900 A offenbart ein Videofonsystem mit einem benutzerdefinierten Bildgebungssystem, das sensorische Informationen von den Benutzern aufnimmt.

Die Druckschrift WO 03/058518 A offenbart ein Verfahren für ein Avatar-Benutzerschnittstellensystem, bei dem ein Avatar-Hosting-Server und ein Session-Server über ein Kommunikationsnetzwerk verbunden sind.

Ein Kerngedanke der Erfindung ist darin zu sehen, eine verteilte Architektur für ein Avatar-basiertes Videokommunikationssystem bereitzustellen, bei der eine grobe Voranalyse der aufgezeichneten Videosequenz einer natürlichen Person in einem Endgerät erfolgt, während die Feinanalyse zum Generieren der Bewegungs- und Texturparameter, die zur Ansteuerung und Animation eines virtuellen Körpermodells erforderlich sind, in einer zentralen Verarbeitungseinrichtung durchgeführt wird. Im Endgerät wird das aktuelle Bild der Videosequenz in grobe Bereiche unterteilt. Nur charakteristische Bereiche des aktuellen Bildes, sogenannte Regions of Interest (RoI), die zum Erzeugen von Steuerdaten erforderlich sind, werden anschließend ausgewählt und zur zentralen Verarbeitungseinrichtung übertragen. Der Rest des Bildes wird verworfen. Die zur Steuerung eines Avatars erforderlichen charakteristischen Bereiche eines Bildes enthalten den Kopf und die beiden Hände. Kopf und Hände können beispielsweise durch Erkennen von Hautfarbe identifiziert werden. Grobsegmentierung bedeutet in diesem Fall, dass nicht die Umrisse der Hand oder des Kopfes exakt beschrieben und dann die zugehörigen Daten übertragen werden. Statt dessen wird beispielsweise ein rechteckiger Block, der die Hand beinhaltet, übertragen. Die Feinanalyse, die eine Feinsegmentierung der übertragenen Bereiche enthält, erfolgt in der ausgelagerten Verarbeitungseinrichtung. Dort werden neben der feineren Segmentierung hinaus alle weiteren notwendigen Analyseschritte durchgeführt, wie zum Beispiel das Zerlegen eines übertragenen Bereiches in Teilobjekte, beispielsweise die Finger der Hand, die Bestimmung der Objektorientierung (beispielsweise die Kopfausrichtung in horizontaler und vertikaler Richtung) und des Zustands von Teilobjekten (beispielsweise der Öffnungsgrad der Augen), der Orientierung von Teilobjekten (beispielsweise die Blickrichtung), der Bewegung von Teilobjekten (beispielsweise Mund oder Augenbrauen), sowie die Identifizierung von Zeigegestiken (beispielsweise die Fingerausrichtung).

Angemerkt sei an dieser Stelle noch, dass entweder der komplette Inhalt der bei der Grobsegmentierung aufgefundenen Bereiche, das heißt die Bildpunkte der Region zur Verarbeitungseinrichtung übertragen wird oder lediglich Parametersätze über den Bildinhalt des jeweiligen Bereichs übertragen werden. Im letzteren Fall kann die Datenübertragungsrate weiter reduziert werden.

Das oben genannte technische Problem wird zum einen durch ein Verfahren zur Gestik-basierten Echtzeit-Steuerung eines virtuellen Körpermodells in einer Videokommunikationsumgebung gelöst. Danach wird eine Videosequenz einer natürlichen Person in einer Endeinrichtung aufgezeichnet. Das aktuelle Bild der Videosequenz wird dann in mehrere Bereiche grob segmentiert. Grobsegmentierung bedeutet beispielsweise, dass nicht die Körperteile der natürlichen Person exakt beschrieben werden, sondern dass statt dessen ein geometrischer Bereich, beispielsweise ein rechteckiger Block betrachtet wird, in dem ein charakteristisches Körperteil dargestellt ist. Aus den Bereichen werden dann bevorzugte Bereiche des aktuellen Bildes der Videosequenz ermittelt. Die bevorzugten Bereiche werden dann von der Endeinrichtung zu einer zentralen Verarbeitungseinrichtung über ein Kommunikationsnetz übertragen, wobei wenigstens ein Teil jedes ermittelten Bereiches durch die entsprechenden Daten übertragen wird. In der Verarbeitungseinrichtung werden Bewegungsparameter unter Ansprechen auf die Daten wenigstens eines Teils jedes ermittelten Bereichs gewonnen. Optional können aus den Daten, die wenigstens einen Teil jedes ermittelten Bereiches darstellen, auch Texturparameter gewonnen werden. Die Bewegungsparameter und gegebenenfalls Texturparameter werden über das oder ein weiteres Kommunikationsnetz zu einer Empfangseinrichtung übertragen. Unter Verwendung der Bewegungs- und gegebenenfalls Texturparameter wird ein in der Empfangseinrichtung gespeichertes virtuelles Körpermodell angesteuert und animiert.

Angemerkt sei an dieser Stelle, dass dank der im Endgerät durchgeführten Grobsegmentierung nur die Daten derjenigen Bereiche über das Kommunikationsnetz übertragen werden müssen, die die relevanten Körperteile der natürlichen Person beinhalten. Dies sind beispielsweise der Kopfbereich und die Bereiche, die die beiden Hände und/oder Arme der natürlichen Person enthalten. Auf diese Weise kann die Rechenleistung im Endgerät sowie die zur Übertragung erforderliche Datenrate deutlich reduziert werden, da die erforderlichen Verfahrensschritte zur Analyse der aufgezeichneten Videosequenz und Generieren von Bewegungsparametern, die zur Ansteuerung eines Avatars erforderlich sind, auf die Endeinrichtung und die zentrale Verarbeitungseinrichtung verteilt werden.

Um ein möglichst naturgetreues Ansteuern des virtuellen Körpermodells zu erzielen, werden vor der Generierung von Bewegungs- und gegebenenfalls Texturparametern die in den ermittelten Bereichen enthaltenen Bildinhalte in Teilobjekte zerlegt und die Orientierung der Teilobjekte und/oder der Zustand der Teilobjekte ermittelt.

Um eine audiovisuelle, Avatar-basierte Videokommunikation aufbauen zu können, werden in der Endeinrichtung ferner die Sprachsignale der natürlichen Person aufgenommen und in entsprechende Sprachparameter umgesetzt. Die Sprachparameter können über die Verarbeitungseinrichtung zur Empfangseinrichtung übertragen werden. Alternativ können die Sprachparameter zusammen mit einem Zeitstempel ohne Zwischenschaltung der Verarbeitungseinrichtung zur Empfangseinrichtung übertragen werden. Die Zeitstempel werden in der Empfangseinrichtung dazu verwendet, die Wiedergabe der Sprachinhalte und Bildinhalte zu synchronisieren.

Das oben genannte technische Problem wird ebenfalls durch ein Avatar-basiertes Kommunikationssystem zur Gestik-basierten Echtzeit-Ansteuerung eines virtuellen Körpermodells gelöst. Gestik-basiert bedeutet, dass die Bewegungen eines virtuellen Körpermodells den Bewegungen der natürlichen Person im Wesentlichen folgen.

Das Avatar-basierte Videokommunikationssystem weist wenigstens ein Kommunikationsnetz auf, welches ein drahtgebundenes oder drahtloses Kommunikationsnetz sein kann. Im Falle eines drahtgebundenen Kommunikationsnetzes kann es sich um das Internet, das ISDN oder ein lokales Netzwerk handeln. Drahtlose Kommunikationsnetze können öffentliche Mobilfunknetze und drahtlose lokale Netzes, sogenannte WLANs, sein.

Über das Kommunikationsnetz können mehrere Endeinrichtungen, die als Sende- und/oder Empfangseinrichtung betreibbar sind, miteinander verbunden werden. Weiterhin kann ein Verarbeitungs-Server mit dem Kommunikationsnetz verbunden werden. Der Verarbeitungs-Server kann direkt am Kommunikationsnetz oder über ein separates Kommunikationsnetz mit dem Kommunikationsnetz verbunden werden. Wenigstens eine der Endeinrichtung ist als Sendeeinrichtung ausgebildet. In diesem Fall weist die Endeinrichtung eine Einrichtung zum Aufzeichnen einer Videosequenz einer natürlichen Person auf. Ferner ist eine Einrichtung zum Grobsegmentieren des aktuellen Bildes der Videosequenz in mehrere Bereiche und zum Ermitteln bevorzugter Bereiche des aktuellen Bildes der Videosequenz sowie eine Übertragungseinichtung vorgesehen, die Daten wenigstens eines Teils jedes ermittelten Bereiches zu dem Verarbeitungs-Server über das Kommunikationsnetz überträgt. Die Funktionen Grobsegmentieren und Ermitteln von bevorzugten Bereichen können auch in separaten Einrichtungen ausgeführt werden. Der Verarbeitungs-Server weist eine Einrichtung zum Generieren von Bewegungs- und gegebenenfalls Texturparametern auf, und zwar unter Ansprechen auf die Daten wenigstens eines Teils jedes empfangenen Bereichs. Ferner verfügt der Verarbeitungs-Server über eine Einrichtung zum Übertragen der Bewegungs- und gegebenenfalls Texturparameter über das oder ein weiteres Kommunikationsnetz zu einer Empfangseinrichtung. Die Empfangseinrichtung weist eine Einrichtung zum Ansteuern eines virtuellen Körpermodells unter Verwendung der Bewegungs- und gegebenenfalls Texturparameter auf. Das virtuelle Körpermodell ist beispielsweise in einem Avatar-Player der Empfangseinrichtung abgelegt.

Um ausschließlich die zur Gewinnung von Bewegungs- und gegebenenfalls Texturparameter charakteristischen Körperteile der natürlichen Person zu berücksichtigen, ist die Einrichtung zur Grobsegmentierung zum Ermitteln des Kopfbereiches und der Handbereiche der aufgenommenen Person ausgebildet.

Um eine möglichst naturgetreue Ansteuerung an Animierung des virtuellen Körpermodells zu erzielen, ist der Verarbeitungs-Server mit einer Zerlegungseinrichtung ausgestattet, die den in den ermittelten Bereichen enthaltenen Bildinhalt in Teilobjekte zerlegt und die Orientierung der Teilobjekte und/oder des Zustandes der Teilobjekte ermittelt.

Um eine audiovisuelle Videokommunikation zu ermöglichen, weist die Sendeeinrichtung jedes Endgerätes ein Mikrofon und einen Audiokodierer zum Erzeugen von Sprachparametern auf. Die Empfangseinrichtung jeder Endeinrichtung weist eine audiovisuelle Wiedergabeeinrichtung auf, wobei die Ansteuerungseinrichtung der Empfangseinrichtung ein herkömmlicher Avatar-Player sein kann.

An dieser Stelle sei angemerkt, dass selbstverständlich mehrere Endeinrichtungen sowohl als Sende- und Empfangseinrichtung betreibbar sind, um eine Voll-Duplexverbindung zwischen den beiden Teilnehmern zu ermöglichen.

Dank der verteilten Architektur des Avatar-basierten Videokommunikationssystems ist ein Einsatz in einer mobilen Umgebung möglich. In diesem Fall können die Endeinrichtungen mobile Endgeräte, wie zum Beispiel PDAs, Smartphones und dergleichen darstellen. Die mobilen Endgeräte können in diesem Fall über ein Mobilfunknetz oder ein drahtloses lokales Funknetz (WLAN) mit einander kommunizieren.

Das oben genannte technische Problem wird ebenfalls durch eine mobile Endeinrichtung zum Einsatz in einem derartigen Avatar-basiert Videokommunikationssystem gelöst. Die mobile Endeinrichtung weist eine Einrichtung zum Aufzeichnen einer Videosequenz einer natürlichen Person, eine Einrichtung zum Grobsegmentieren des aktuellen Bildes der Videosequenz in mehrere Bereiche, eine Einrichtung zum Ermitteln vorbestimmter Bereiche des aktuellen Bildes der Videosequenz sowie eine Einrichtung zum Übertragen von Daten wenigstens eines Teils jedes ermittelten Bereichs zu dem Verarbeitungs-Server über das Kommunikationsnetz auf.

Die Erfindung wird nachfolgend anhand eines Ausführungsbeispiels in Verbindung mit den beiliegenden Zeichnungen näher erläutert. Funktionsgleiche Komponenten sind durch gleiche Bezugszeichen gekennzeichnet. Es zeigen:
- Fig. 1: die schematische Darstellung eines bekannten Avatar-basierten Videokommunikationssystems und
- Fig. 2: die schematische Darstellung einer verteilten Architektur eineserfindungsgemäßen Avatar-basierten Videokommunikationssystems.

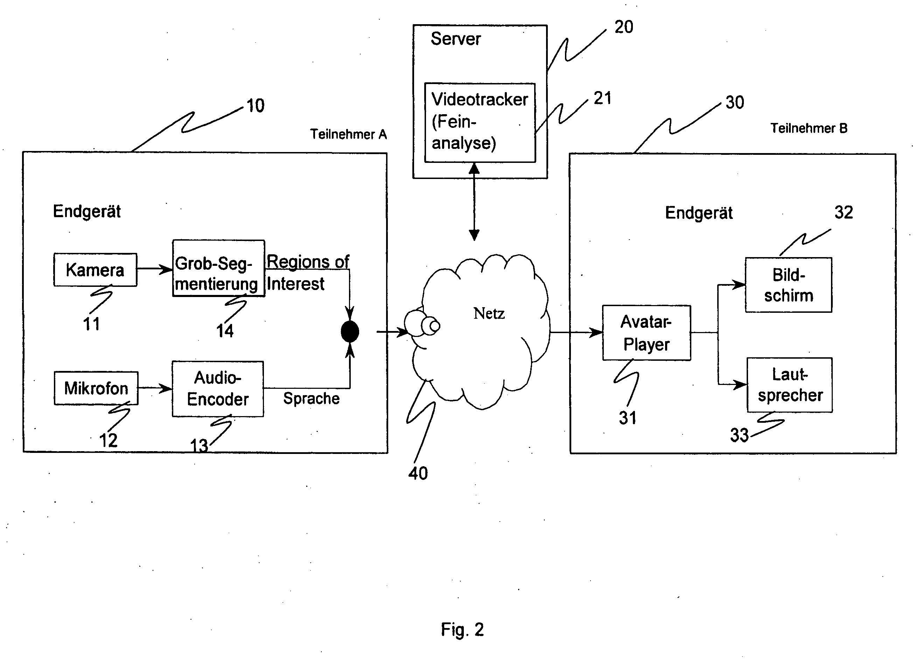

Fig. 2 ist eine schematische Darstellung eines Avatar-basierten Videokommunikationssystems, welches beispielsweise in einer Mobilfunkumgebung installiert ist. Lediglich der einfachen Darstellung wegen, zeigt Fig. 2 nur ein mobiles Endgerät 10, welches über ein Mobilfunknetz 40 mit einem Endgerät 30 verbunden ist. Über das Mobilfunknetz 40 ist ferner ein Verarbeitungs-Server 20 erreichbar. Angemerkt sei, dass die in Fig. 2 dargestellte verteilte Architektur für eine Videokonferenz mit mehr als zwei beteiligten Kommunikationspartnern geeignet ist.

Das Endgerät 10 des Teilnehmers A weist eine Videokamera 11 auf, die Bewegungen des Teilnehmers A aufzeichnen kann. Die von der Videokamera 11 erzeugten Videodaten werden einer Grobsegemtierungseinrichtung 14 übergeben. Die Grobsegmentierungseinrichtung extrahiert aus dem aktuellen Bild der aufgezeichneten Videosequenz lediglich die Bereiche, die die bevorzugten Körperteile des Teilnehmers A enthalten, die zur Ansteuerung eines virtuellen Körpermodells erforderlich sind. Bei den bevorzugten oder charakteristischen Körperteilen handelt es sich vorzugsweise um den Kopf und die beiden Hände des natürlichen Teilnehmers A. Um eine audiovisuelle Kommunikation zu ermöglichen, weist das Endgerät 10 ferner ein Mikrofon 12 auf, dessen Ausgang mit einem Audiokodierer 13 verbunden ist.

Das Endgerät 30 des Teilnehmers B weist einen an sich bekannten Avatar-Player 31 auf, in dem ein anzusteuerndes virtuelles Körpermodell hinterlegt ist. Ausgangsseitig ist der Avatar-Player 31 mit einem Bildschirm 32 und einem Lautsprecher 33 verbunden, die für die visuelle und akustische Wiedergabe der Ausgangsdaten des Avatar-Players 31 sorgen.

Angemerkt sei, dass bei einer Voll-Duplexverbindung das Endgerät 10 ebenfalls einen Avatar-Player, einen Bildschirm und einen oder mehrere Lautsprecher enthält. Das Endgerät 30 kann in diesem Fall die hinsichtlich des Endgerätes 10 gezeigten Komponenten aufweisen.

In dem Verarbeitungs-Server 20 ist ein sogenannter Videotracker 21 implementiert, der eine Feinanalyse der aufgezeichneten Videosequenz durchführt. Dabei ist darauf zu achten, dass die für den Videotracker 21 wesentlichen Informationen auch nach der Grobsegmentierung im Endgerät 10 erhalten bleiben und zum Verarbeitungs-Server 20 übertragen werden.

Nunmehr wird die Funktionsweise des in Fig. 2 dargestellten Avatar-basierten Videokommunikationssystems näher erläutert.

Angenommen sei, dass die Teilnehmer A und B eine Video-Telefonie-Kommuniktion führen möchten.

Der einfacheren Erläuterung wegen wird lediglich ein Datenfluß vom Endgerät 10 zum Endgerät 30 betrachtet.

Die Kamera 11 des Endgeräts 10 nimmt den Teilnehmer A auf und führt die erzeugten Bild- oder Videosequenzen an den Eingang der Grobsegmentierungseinrichtung 14. Die Grobsegmentierungseinrichtung 14 führt unter Anwendung eines an sich bekannten Schätz- Algorithmus eine Grobsegmentierung des aktuellen Bildes der Videosequenz durch, indem die beispielsweise die Farbinformation der einzelnen Bildpunkte analysiert werden. Auf diese Weise können Bildbereiche mit ähnlicher Farbe und Textur ermittelt und von anderen Bildregionen abgegrenzt werden. Um die Bereiche, die den Kopf und die Hände des Teilnehmers A enthalten, in dem aktuellen Bild zu finden, können die Bereiche gesucht werden, die einen hohen Grad an Hautfarbe entahlten. Alternative Algorithmen können eingesetzt werden, die beispielsweise die Konsistenz in der Bewegung, die Mindestgröße und relative Position der Bildregionen zueinander berücksichtigen. Die von der Grobsegmentierungseinrichtung 14 aufgefundenen Bereiche, auch Regions of Interest genannt, beinhalten zunächst nur grobe, beispielsweise rechteckige Bereich, in denen sich der Kopf beziehungsweise die Hände befinden. Die Grobsegmentierungseinrichtung 14 stellt ausgangsseitig einen Datensatz bereit, der zumindest einen Teil jedes der ermittelten Bereiche darstellt.

Über das Mikrofon 12 können Sprachsignale des Teilnehmers A aufgenommen und dem Audiokodierer 13 zugeführt. Der Audiokodierer liefert ausgangsseitig Sprachparameter, die zum Beispiel auch Viseme enthalten können, so dass eine zum Sprechsignal passende Lippenbewegung im Avatar-Player 31 des Endgerätes 30 generiert werden kann.

Im vorliegenden Beispiel werden die Videdaten, welche die durch Grobsegmentierung ermittelten Bereiche darstellen, und die Sprachdaten gemäß einem vorbestimmten Kommunikationsprotokoll in Datenpakete gepackt und über das Kommunikationsnetz 40 zum Verarbeitungs-Server 20 übertragen. Die Datenpakete enthalten zusätzlich die Adresse des Verarbeitungs-Servers 20 als auch die Zieladresse des Endgeräts 30.

Je nach Implementierung sorgt das Videokommunikationssystem dafür, dass bei einem Avatar-basierten Verbindungswunsch des Teilnehmers A zumindest die Videodaten zunächst zum Verarbeitungsserver 20 und dann zum Endgerät 30 übertragen werden. Die Sprachdaten können, müssen aber nicht über den verarbeitungs-Server 20 zum Endgerät 30 übertragen werden. Die Videodatenübertragung zum Verarbeitungs-Server 20 kann vom rufenden Endgerät 10 oder von einer zentralen Einrichtung (nicht dargestellt) des Kommunikationsnetzes aus gesteuert werden.

Der Videotracker 21 führt eine Feinanalyse durch, indem er die während der Grobsegmentierung ermittelten Bereiche in Teilobjekte zerlegt. Beispielsweise werden die Bereiche, die die Hand darstellen, in weitere kleinere Teilbereiche zerlegt, die die Finger einer Hand darstellen. In ähnlicher Weise kann der Bereich, der das Gesicht darstellt, in Unterbereiche zerlegt werden, die die Nase, die Augen, das Kinn und beispielsweise die Ohren darstellen. Darüber hinaus ermittelt der Videotracker 21 aus den empfangenen Videodaten die Objektorientierung, beispielsweise die Kopfausrichtung. Darüber hinaus kann der Videotracker 21 den Zustand von Teilobjekten, beispielsweise den Öffnungsgrad der Augen oder des Mundes ermitteln. Ferner kann auch die Bewegung der Teilobjekte, wie zum Beispiel die Mundbewegung und Bewegung der Augenbrauen ermittelt werden. Aus den gesammelten Informationen des aktuellen Bildes erzeugt der Videotracker 21 Bewegungs- und gegebenenfalls Texturparameter. Die Bewegungs- und Texturparameter werden dann im vorliegenden Beispiel zusammen mit den Sprachparamtern in einem standardisierten Format, beispielsweise einem MPEGkompatiblen Format über das Kommunikationsnetz 40 zum Endgerät 30 übertragen. Die Zieladresse des Endgerätes 30 entnimmt der Verarbeitungs-Server 20 vorzugsweise aus den vom Endgerät 10 kommenden Datenpaketen.

Die Bewegungs- und Texturparameter werden zusammen mit den Sprachparamtern dem Avatar-Player 31 des Endgerätes 30 übergeben, der Daten in einem MPEG-Format verarbeiten kann. Der Avatar-Player 31 trennt die empfangenen Steuerparameter in Bild- und Sprachinformationen auf und übergibt sie dem Bildschirm 32 und dem Lautsprecher 33. Auf diese Weise kann eine Avatar-basierte audiovisuelle Kommunikation zwischen dem Endgerät 10 und dem Endgerät 30 geführt werden.

## Patentansprüche

1. Verfahren zur Gestik-basierten Echtzeitansteuerung eines virtuellen Körpermodells in einer Videokommunikationsumgebung, mit den Schritten:
a) Aufzeichnen einer Videosequenz einer Person in einer Endeinrichtung (10);
b) Grobsegmentieren des aktuellen Bildes der Videosequenz in mehrere Bereiche;
c) Ermitteln bevorzugter Bereiche des aktuellen Bildes der Videosequenz;
d) Übertragen von Daten wenigstens eines Teils jedes ermittelten Bereichs von der Endeinrichtung (10) zu einer Verarbeitungseinrichtung (20) über ein Kommunikationsnetz (40);
e) Generieren von Bewegungsparameter, und zwar unter Ansprechen auf die Daten wenigstens eines Teils jedes ermittelten Bereichs;
f) Übertragen der Bewegungsparameter von der Verarbeitungseinrichtung (20) über das oder ein weiteres Kommunikationsnetz zu einer Zieleinrichtung (30);
g) Ansteuern eines virtuellen Körpermodells unter Verwendung der Bewegungsparameter in der Zieleinrichtung (30).

2. Verfahren nach Anspruch 1,
**dadurch gekennzeichnet, dass**
Schritt c) das Ermitteln des Kopfbereichs und der Hand- und/oder Armbereiche und Schritt e) das Generieren von Texturparametern umfasst.

3. Verfahren nach einem der vorstehenden Ansprüche,
**dadurch gekennzeichnet, dass**
vor Durchführung des Schrittes e) der in den zur Verarbeitungseinrichtung übertragenen bevorzugten Bereichen enthaltene Bildinhalt in Teilobjekte zerlegt und die Orientierung der Teilobjekte und/oder der Zustand der Teilobjekte ermittelt wird.

4. Verfahren nach einem der vorstehenden Ansprüche,
**gekennzeichnet durch** die Schritte:
Aufnehmen von akustischen Signalen;
Erzeugen von Sprachparametern;
Übertragen der Sprachparameter über die Verarbeitungseinrichtung (20) zur Zieleinrichtung (30) oder
Übertragen der Sprachparameter ohne Zwischenschaltung der Verarbeitungseinrichtung zur Zieleinrichtung.

5. Avatar-basiertes Videokommunikationssystem zur Gestikbasierten Echtzeitansteuerung eins virtuellen Körpermodells, umfassend
wenigstens ein Kommunikationsnetz (40), mehrere Endeinrichtungen (10, 30), die als Sende- und/oder Empfangseinrichtung betreibbar sind und über das Kommunikationsnetz (40) miteinander verbunden werden können, und
einen Verarbeitungs-Server (20), der mit dem Kommunikationsnetz (40) verbunden werden kann, wobei wenigstens eine der Endeinrichtungen (10) eine Sendeeinrichtung mit folgenden Merkmalen aufweist:
eine Einrichtung (11) zum Aufzeichnen einer Videosequenz einer natürlichen Person;
eine Einrichtung (14) zum Grobsegmentieren des aktuellen Bildes der Videosequenz in mehrere Bereiche und zum Ermitteln bevorzugter Bereiche des aktuellen Bildes der Videosequenz;
eine Einrichtung zum Übertragen von Daten wenigstens eines Teils jedes ermittelten Bereichs zu dem Verarbeitungs-Server (20) zumindest über das Kommunikationsnetz (40), und wobei der Verarbeitungs-Server (20) aufweist:
eine Einrichtung (21) zum Generieren von Bewegungsparametern, und zwar unter Ansprechen auf die Daten wenigstens eines Teils jedes empfangenen Bereichs;
eine Einrichtung zum Übertragen der Bewegungsparameter über das oder ein weiteres Kommunikationsnetz zu einer Zieleinrichtung (30), die
eine Einrichtung (31) zum Ansteuern eines virtuellen Körpermodells unter Verwendung der Bewegungsparameter aufweist.

6. Avatar-basiertes Videokommunikationssystem nach Anspruch 5, wobei
die Einrichtung (14) zur Grobsegmentierung zum Ermitteln des Kopfbereichs und der Hand- und/oder der Armbereiche der aufgenommenen Person und die Gnereierungseinrichtung zum Generieren von Texturparametern ausgebildet ist.

7. Avatar-basiertes Videokommunikationssystem nach Anspruch 5 oder 6, wobei
der Verarbeitungs-Server (20) eine Einrichtung zum Zerlegen des in den ermittelten Bereichen enthaltenen Bildinhalts in Teilobjekte und zum Ermitteln der Orientierung der Teilobjekte und/oder des Zustands der Teilobjekte ausgebildet ist.

8. Avatar-basiertes Videokommunikationssystem nach einem der Ansprüche 5 bis 7, wobei
die wenigstens eine Sendeeinrichtung ein Mikrofon (12) und einen Audiokodierer (13) zum Erzeugen von Sprachparametern und die Zieleinrichtung (30) eine audiovisuelle Wiedergabeeinrichtung (32, 33) aufweist, wobei die Ansteuerungseinrichtung (31) der Zieleinrichtung (30) ein Avatar-Player ist.

9. Avatar-basiertes Videokommunikationssystem nach einem der Ansprüche 5 bis 8, wobei die als Sendeeinrichtung betreibbare Endeinrichtung ein mobiles Endgerät und das Kommunikationsnetz (40) ein Mobilfunknetz oder drahtloses lokales Netz umfasst.

10. Mobile Endeinrichtung (10) zum Einsatz in einem avatar-basierten Videokommunikationssystem, umfassend eine Einrichtung (11) zum Aufzeichnen einer Videosequenz einer natürlichen Person;
eine Einrichtung (14) zum Grobsegmentieren des aktuellen Bildes der Videosequenz in mehrere Bereiche und zum Ermitteln vorbestimmter Bereiche des aktuellen Bildes der Videosequenz;
eine Einrichtung zum Übertragen von Daten wenigstens eines Teils jedes ermittelten Bereichs zu einem Verarbeitungs-Server (20) über wenigstens ein Kommunikationsnetz (40).

## Claims

1. A method for gesture-based real-time control of a virtual body model in a video communication environment, comprising the steps of:
a) recording a video sequence of a person at a terminal (10);
b) coarse segmentation of the current image of the video sequence into a plurality of regions;
c) identifying preferred regions of the current image of the video sequence;
d) transmitting data of at least a portion of each identified region from the terminal (10) to a processing means (20) via a communication network (40);
e) generating motion parameters in response to the data of at least a portion of each identified region;
f) transmitting the motion parameters from the processing means (20) to a destination device (30) via the or a further communication network;
g) controlling a virtual body model using the motion parameters in the destination device (30).

2. The method according to claim 1, **characterized in that** step c) comprises identifying the head region and the hand and/or arm regions, and step e) comprises generating texture parameters.

3. The method according to any of the preceding claims, **characterized in that** before performing step e) the image content included in the preferred regions transmitted to the processing means is decomposed into sub-objects and the orientation of the sub-objects and/or the state of the sub-objects is determined.

4. The method according to any of the preceding claims, **characterized by** the steps of:
recording acoustic signals;
generating voice parameters;
transmitting the voice parameters to the destination device (30) via the processing means (20); or
transmitting the voice parameters to the destination device without interposition of the processing means.

5. An avatar-based video communication system for gesture-based real-time control of a virtual body model, comprising:
at least one communication network (40);
a plurality of terminals (10, 30) which are operable as transmitting and/or receiving devices and connectable to each other via the communication network (40); and
a processing server (20) connectable to the communication network (40);
wherein at least one of the terminals (10) comprises transmitting means comprising the features of:
means (11) for recording a video sequence of a natural person;
means (14) for coarse segmentation of the current image of the video sequence into a plurality of regions and
for identifying preferred regions of the current image of the video sequence;
means for transmitting data of at least a portion of each identified region to the processing server (20) at least via the communications network (40);
and wherein the processing server (20) comprises:
means (21) for generating motion parameters in response to the data of at least a portion of each received region;
means for transmitting the motion parameters, via the or a further communication network, to a destination device (30) which includes
means (31) for controlling a virtual body model using the motion parameters.

6. The avatar-based video communication system according to claim 5, wherein said means (14) for coarse segmentation is adapted for identifying the head region and the hand and/or arm regions of the recorded subject, and said generating means is adapted for generating texture parameters.

7. The avatar-based video communication system according to claim 5 or 6, wherein
the processing server (20) is configured as a means for decomposing the image content included in the identified regions into sub-objects and for determining the orientation of the sub-objects and/or the state of the sub-objects.

8. The avatar-based video communication system according to any of claims 5 to 7, wherein the at least one transmitting device comprises a microphone (12) and an audio encoder (13) for generating voice parameters; and wherein the destination device (30) comprises audiovisual reproduction means (32, 33), wherein said controlling means (31) of said destination device (30) is an avatar player.

9. The avatar-based video communication system according to any of claims 5 to 8, wherein the terminal operable as a transmitting device is a mobile terminal; and wherein said communication network (40) comprises a cellular network or a wireless local area network.

10. A mobile terminal (10) for use in an avatar-based video communication system, comprising
means (11) for recording a video sequence of a natural person;
means (14) for coarse segmentation of the current image of the video sequence into a plurality of regions and for identifying predetermined regions of the current image of the video sequence;
means for transmitting data of at least a portion of each identified region to a processing server (20) via at least one communication network (40).

## Revendications

1. Procédé de commande en temps réel, basée sur la gestuelle, d'un modèle corporel virtuel dans un environnement de communication vidéo, comprenant les étapes suivantes :
a) enregistrement d'une séquence vidéo d'une personne sur un dispositif terminal (10) ;
b) segmentation grossière en plusieurs secteurs de l'image actuelle de la séquence vidéo ;
c) détermination de secteurs préférentiels de l'image actuelle de la séquence vidéo ;
d) transmission de données d'au moins une partie de chaque secteur déterminé du dispositif terminal (10) à un dispositif de traitement (20) par l'intermédiaire d'un réseau de communication (40) ;
e) génération de paramètres de mouvement, et cela en réaction aux données d'au moins une partie de chaque secteur déterminé ;
f) transmission des paramètres de mouvement du dispositif de traitement (20) à un dispositif-cible (30) par l'intermédiaire du réseau, ou d'un autre réseau de communication ;
g) commande d'un modèle corporel virtuel en recourant aux paramètres de mouvement dans le dispositif-cible (30).

2. Procédé selon la revendication 1, **caractérisé en ce que** l'étape c) comprend la détermination du secteur de tête et des secteurs de mains et/ou de bras, et l'étape e) la génération de paramètres de texture.

3. Procédé selon l'une des revendications précédentes, **caractérisé en ce que** préalablement à l'exécution de l'étape e), le contenu d'image des secteurs préférentiels transmis au dispositif de traitement est décomposé en objets partiels, et l'orientation des objets partiels et/ou l'état des objets partiels sont déterminés.

4. Procédé selon l'une des revendications précédentes, **caractérisé par** les étapes suivantes :
enregistrement de signaux acoustiques ;
génération de paramètres vocaux ;
transmission des paramètres vocaux au dispositif-cible (30) par l'intermédiaire du dispositif de traitement (20) ou
transmission des paramètres vocaux au dispositif-cible sans médiation du dispositif de traitement.

5. Système de communication vidéo basé sur des avatars pour la commande en temps réel, basée sur la gestuelle, d'un modèle corporel virtuel, comprenant
au moins un réseau de communication (40),
plusieurs dispositifs terminaux (10, 30), pouvant être mis en service comme dispositifs émetteur et/ou dispositif récepteur et pouvant être reliés entre eux par le réseau de communication (40), et
un serveur de traitement (20) pouvant être raccordé au réseau de communication (40), au moins un des dispositifs terminaux (10) comportant un dispositif émetteur ayant les caractéristiques suivantes :
un dispositif (11) d'enregistrement d'une séquence vidéo d'une personne naturelle ;
un dispositif (14) de segmentation grossière de l'image actuelle de la séquence vidéo en plusieurs secteurs, et de détermination de secteurs préférentiels de l'image actuelle de la séquence vidéo ;
un dispositif de transmission de données d'au moins une partie de chaque secteur déterminé au serveur de traitement (20) au moins par l'intermédiaire du réseau de communication (40), et le serveur de traitement (20) comportant :
un dispositif (21) de génération de paramètres de mouvement, et cela en réaction aux données d'au moins une partie de chaque secteur reçu ;
un dispositif de transmission des paramètres de mouvement à un dispositif-cible (30) par l'intermédiaire du réseau, ou d'un autre réseau de communication,
lequel comporte un dispositif (31) de commande d'un modèle corporel virtuel recourant aux paramètres de mouvement.

6. Système de communication vidéo basé sur des avatars selon la revendication 5,
où le dispositif (14) de segmentation grossière est prévu pour la détermination du secteur de tête et des secteurs de mains et/ou de bras de la personne enregistrée, et le dispositif de génération pour la génération de paramètres de texture.

7. Système de communication vidéo basé sur des avatars selon la revendication 5 ou 6, où le serveur de traitement (20) est réalisé comme dispositif de décomposition en objets partiels du contenu d'image des secteurs déterminés et de détermination d'orientation des objets partiels et/ou d'état des objets partiels.

8. Système de communication vidéo basé sur des avatars selon l'une des revendications 5 à 7, où le ou les dispositifs émetteurs comportent un microphone (12) et un codeur audio (13) pour la génération de paramètres vocaux, et le dispositif-cible (30) un dispositif de lecture audiovisuel (32, 33), le dispositif de commande (31) du dispositif-cible (30) étant un lecteur d'avatar.

9. Système de communication vidéo basé sur des avatars selon l'une des revendications 5 à 8, où le dispositif terminal pouvant être mis en service comme dispositif émetteur comprend un appareil terminal mobile, et où le réseau de communication (40) comprend un réseau de téléphonie mobile ou un réseau local sans fil.

10. Dispositif terminal mobile (10) destiné à être mise en oeuvre dans un système de communication vidéo basé sur des avatars, comprenant
un dispositif (11) d'enregistrement d'une séquence vidéo d'une personne naturelle ;
un dispositif (14) de segmentation grossière de l'image actuelle de la séquence vidéo en plusieurs secteurs, et de détermination de secteurs prédéfinis de l'image actuelle de la séquence vidéo ;
un dispositif de transmission de données d'au moins une partie de chaque secteur déterminé à un serveur de traitement (20) par l'intermédiaire d'au moins un réseau de communication (40).
